**Europäisches Patentamt**

**European Patent Office**

**Office européen des brevets**

(19)

(11) Veröffentlichungsnummer: **0 051 758**
**B1**

(12) **EUROPÄISCHE PATENTSCHRIFT**

(45) Veröffentlichungstag der Patentschrift:
**10.04.85**

(51) Int. Cl.⁴: **G 10 K 15/04**

(21) Anmeldenummer: **81108267.6**

(22) Anmeldetag: **13.10.81**

(54) **Elektrodynamischer Ultraschallwandler.**

(30) Priorität: **12.11.80 DE 3042645**

(43) Veröffentlichungstag der Anmeldung:
**19.05.82 Patentblatt 82/20**

(45) Bekanntmachung des Hinweises auf die Patenterteilung:
**10.04.85 Patentblatt 85/15**

(84) Benannte Vertragsstaaten:
**FR GB IT SE**

(56) Entgegenhaltungen:
**DE - A - 2 623 266**
**DE - A - 2 657 957**
**DE - B - 1 225 274**

(73) Patentinhaber: **Nukem GmbH, Rodenbacher Chaussee 6 Postfach 11 00 80, D-6450 Hanau 11 (DE)**

(72) Erfinder: **Hüschelrath, Gerhard, Dr., Am Klingesgraben 7, D-8752 Laufach (DE)**
Erfinder: **Laudenbach, Karl, Kleebachstrasse 88, D-6300 Giessen (DE)**

(74) Vertreter: **Strasse, Joachim, Dipl.-Ing. et al, Strasse und Stoffregen European Patent Attorneys Zweibrückenstrasse 17, D-8000 München 2 (DE)**

ACTORUM AG

### Beschreibung

Die Erfindung bezieht sich auf einen elektrodynamischen, mit zumindest je einer Erreger- und Empfangsspule versehenen Ultraschallwandler für die zerstörungsfreie Werkstoffprüfung mittels Ultraschall.

Im Zuge der Qualitätssicherung und Produktionsoptimierung bei der Herstellung von Blechen und insbesondere auch von Stahlrohren werden in hohem Masse Ultraschall-Messverfahren eingesetzt, darunter auch Wanddicken-Messverfahren, basierend auf der elektrodynamischen Anregung von Ultraschall. Die elektrodynamische Anregung von Ultraschall beruht auf der Tatsache, dass auf einen stromführenden Körper in einem Magnetfeld eine Kraft ausgeübt wird, die senkrecht auf die Ebene wirkt, die von dem Magnetfeld- und dem Stromvektor aufgespannt wird. Ein Elektromagnet erzeugt über eine Polschuhkonfiguration das notwendige Magnetfeld. Im Bereich dieses Magnetfeldes wird über einen Stromimpuls in einer Wandlerspule ein Wirbelstromimpuls im Prüfling angeregt. Die Grösse des so entstehenden Kraftimpulses und damit die Stärke des Ultraschallimpulses hängt natürlich von der Wirbelstromstärke, vor allem aber von der Magnetfeldstärke ab. Um ausreichend starke Ultraschallimpulse im Prüfling erzeugen zu können, sind Feldstärken von 1–1,5 Tesla und Wirbelstromstärken von einigen Ampere an der Prüflingsoberfläche notwendig, was nur zu erreichen ist, wenn der elektrodynamische Wandlerkopf sehr nahe an den Prüfling gebracht wird.

Die Genauigkeit der Wanddickenmessung hängt vor allem von den Eigenschaften des erzeugten Schallfeldes ab, welche bei dem vorgenannten Verfahren wesentlich durch die Richtung des Magnetfeldes und der Leitungsführung der Erregerspule des elektrodynamischen Wandlers geprägt wird.

In dem 3. Technisch-wissenschaftlichen Bericht zu RS 102-18, Teil II «Elektrodynamische Verfahren», der Fraunhofer-Gesellschaft zur Förderung der angewandten Forschung e.V. ist von W. Mohr und W. Repplinger ein elektrodynamischer Ultraschallwandler beschrieben, dessen Erreger- und Empfangsspulen aus Kupferlackdraht, einem elektrisch gut leitenden Material, hergestellt sind. Für die Erzeugung hinreichend starker Schallwellen muss bei diesem Ultraschallwandler erregerwicklungsseitig mit hohen Strömen gearbeitet werden. Da die Empfangskreise eine grosse Empfindlichkeit aufweisen, werden auch noch kleine Ausschwingspannungen von der Erregerspule auf die Empfangsspule mit übertragen und im Empfänger verstärkt. Die Echosignale aus dem Prüfling liegen im Bereich von einigen Millivolt. Deshalb tritt bei ungedämpfter Erregung eine erhebliche Totzeit von mehreren Mikrosekunden auf, bis die Schwingungen der Erregerspule abgeklungen sind. Während dieser Zeit ist es nicht möglich, reflektierte Signale zu empfangen und zu verarbeiten.

Das bedeutet, dass beispielsweise bei Stahlrohren grösserer Abmessungen Wanddicken bis ca. 10 mm wegen der Totzeit nicht geprüft werden können. Unterhalb einer gewissen Materialdicke ist also eine Prüfung mittels elektrodynamischem Wandler auf die bisherige Weise überhaupt nicht oder nur über mehrfach reflektierte Echos möglich.

Um die Totzeit zu verringern, wird in dem oben erwähnten Bericht empfohlen, den Empfangskreis während des Sendesignals und des nachfolgenden Ausschwingens sowie den Sendekreis nur während des Ausschwingens zu dämpfen. Für die Dämpfung ist ein an die Wandlerspule angeschlossener Frequenzthyristor vorgesehen, der die Spule während der Dämpfungszeiten kurzschliesst. Eine wirksame Verminderung der Totzeit und damit der unprüfbaren Zone im Materials ist jedoch nur mit Thyristoren für grosse Leistungen mit sehr kurzen Schaltzeiten erreichbar. Bei Thyristoren, die hohe Ströme schalten müssen, ergeben sich jedoch Grenzen für die Schaltzeiten.

Die zur Zeit bekannten elektrodynamischen Ultraschallwandler zeigen hinsichtlich der Bedämpfung noch folgende Eigenschaften: Massgebend für die Bedämpfung der Erreger- und Empfangsschwingkreise sind die im Prüfling induzierten Wirbelströme. Jede Änderung der Messanordnung, die die Ausbildung der Wirbelströme im Prüfling beeinflusst, wirkt sich damit direkt auf die Schwingkreisbedämpfung aus.

Dies kann durch eine Änderung des Abstands des Wandlers zum Prüfling geschehen oder auch durch unterschiedliches Prüflingsmaterial bzw. durch deren Gefügeunterschiede und Oberflächenbeschaffenheit. Die Wirkung einer Schwingkreisdämpfung lässt sich an einer verlängerten Totzeit, einer veränderten Echoimpulsform (Breite, Höhe) sowie einem geänderten Signal/Rauschverhältnis erkennen.

Kann man den Einfluss von Materialunterschieden durch Anpassung der äusseren Beschaltung der Spulen beim Materialwechsel zum Teil ausgleichen, so geht dies bei den im praktischen Betrieb auftretenden Abstandsschwankungen zwischen dem Ultraschallwandler und dem Prüfling nicht. Dies drückt sich in den relativ engen Abstandstoleranzen aus, die für bestehende Konstruktionen gelten (z.B. 0,5–0,7 mm Abstand vom Prüfling bei der oben erläuterten Anordnung).

Der Erfindung liegt die Aufgabe zugrunde, einen elektrodynamischen Ultraschallwandler der eingangs beschriebenen Gattung so zu verbessern, dass die Totzeiten verkürzt werden und die negativen Einflüsse, die bei der Messung von unterschiedlichen Prüflingsmaterialien und bei Abstandsänderungen auftreten, zu beseitigen bzw. möglichst gering zu halten, ohne das Signal/Rauschverhältnis wesentlich zu beeinträchtigen.

Die Aufgabe wird erfindungsgemäss dadurch gelöst, dass die für die Stromleitung bestimmten Teile der Erreger- und/oder Empfangsspule aus Widerstandsmaterial bestehen, wobei der spezifische Widerstand des Widerstandsmaterials bei 20°C etwa zehn- bis siebzigmal grösser ist als der spezifische Widerstand von Leitungskupfer bei 20°.

Es hat sich überraschend gezeigt, dass durch eine derartige Massnahme die Totzeit der Messvorrichtung und damit die Grösse der unprüfbaren Zone des Prüflings erheblich vermindert werden kann. Ein wesentlicher Vorteil gegenüber den bisher bekannten elektrodynamischen Ultraschallwandlern besteht in der Möglichkeit, bei Prüflingen mit geringen Wandstärken Fehler feststellen zu können. Darüberhinaus erhöht sich die Zuverlässigkeit der Messung durch die Einbeziehung von Wandzonen, die bisher nicht erfassbar waren. Während bei den bekannten elektrodynamischen Ultraschallwandlern bereits kleine Abstandsänderungen zwischen dem Wandler und der Prüflingsoberfläche die Messergebnisse in unerwünscht grossem Umfang beeinflussen, ist dies bei der vorstehend beschriebenen Vorrichtung in weitaus geringerem Masse der Fall. Da der Zwang zur Einhaltung sehr genauer Abstände entfällt, lässt sich die Vorrichtung einfacher und schneller handhaben.

Vorzugsweise bestehen die Erreger- und die Empfangsspule jeweils aus unterschiedlichem Widerstandsmaterial.

Hierbei ist es günstig, in der Erregerwicklung einen kleineren Widerstandsbelag zu wählen als in der Empfangswicklung. Damit lässt sich eine grosse Leistung des Ultraschallwandlers bei geringen Totzeiten erzielen.

Bei einer bevorzugten Ausführungsform besteht das Widerstandsmaterial aus Legierungen mit hohen Nickel- und Chromgehalten. Derartige Legierungen werden auch als Heizleiterwerkstoffe eingesetzt. Zu diesen Legierungen gehören CuNi 30 Fe, CuNi 5 Fe, NiCr 8020, NiCr 6015 und NiCr 3020.

Vorzugsweise besteht die Empfangsspule aus NiCr 6015. Hierbei handelt es sich um eine Heizleiterlegierung, die nach DIN 17470 zu 60% aus Ni, zu 15% aus Cr und zu 25% aus Fe besteht.

Die Erregerspule besteht zweckmässigerweise aus CuNi 11. Gut geeignet sind neben Knetlegierungen des Kupfers mit hohem Nickel-Anteil auch im Handel erhältliche Widerstandspasten und Leitkleber. Diese Materialien werden vorzugsweise aus Metall-, Metallegierungen- bzw. Kohlenstoffpulver und einem Bindemittel hergestellt.

Die Wicklungen der Spulen aus Widerstandsmaterial zu fertigen hat sich als überraschend einfache, optimale Lösung erwiesen. Durch eine entsprechende Widerstandsbelastung der jeweiligen Spulen können die Eigenschwingungen des Spulensystems besonders gut gedämpft werden.

Für die Totzeit des elektrodynamischen Ultraschallwandlers erweist sich demnach nicht nur die Beschaltung der Schwingkreise als massgebend sondern im wesentlichen Umfang auch die Eigenresonanzen der Spulen. Durch eine äussere Bedämpfung mit an die Spulen angeschlossenen Widerständen können diese Eigenresonanzen aber nicht gedämpft werden. Dies ist nur durch einen entsprechenden Widerstandsbelag im Spulenmaterial erreichbar. In dem Widerstand des Spulenmaterials werden die in den Streu- und Koppelfeldern vorhandenen Energien schnell abgebaut.

Prinzipiell findet ein Abbau der Restfelder um so schneller statt, je höher der Widerstandsbelag ist. Aus technischen Gründen lässt sich aber z.B. bei der Erregerwicklung der Widerstandsbelag nicht beliebig hoch treiben, da ja ein möglichst grosser Strom durch die Erregerwicklung fliessen soll. Der Widerstandsbelag der Erregerspule muss also so gewählt werden, dass sich eine Anpassung an den Senderinnenwiderstand ergibt, dieser ist aber in der Regel niederohmig.

Grundsätzlich anders sind die Verhältnisse bei der Empfangswicklung. Hier sollen kleine Ströme detektiert werden. Die Eingangsschaltungen der Empfangsverstärker sind in der Regel hochohmig, so dass auch die Empfangswicklung hochohmig sein darf. Man kann also hier einen grossen Widerstandsbelag zulassen.

Wegen der o.a. schaltungstechnischen Anforderungen sowie einer guten mechanischen Zugfestigkeit bei niedrigem Preis und leichter Beschaffung hat es sich als besonders günstig erwiesen, das Spulenmaterial aus Legierungen mit hohen Nickel- und Chromgehalten zu benutzen, wobei sich NiCr 6015 wegen seines hohen Widerstandsbelages und guter Verarbeitbarkeit besonders für Empfangswicklungen und CuNi 11 besonders für Erregerwicklungen eignet, weil Spulen aus CuNi 11 sich besonders günstig an vorhandene Sender anpassen lassen und eine hohe Strombelastung zulassen.

Die Erreger- und Empfangswicklung des elektrodynamischen Wandlers, die empfindlich sind, müssen geschützt auf einer Trägerplatte montiert sein. Diese Tatsache ermöglicht auch die Verarbeitung anderer Widerstandsmaterialien durch andere Techniken als das Wickeln von Widerstandsdrähten. Besonders günstig ist dabei das Aufbringen einer Widerstandspaste direkt auf das Trägermaterial. Auch ein Aufdampfen des Widerstandsmaterials auf die Trägerplatten hat sich wegen der Gleichmässigkeit des Materialauftrages als besonders vorteilhaft herausgestellt. Durch anschliessendes Ätzen, Ritzen, Schlitzen oder andere an sich bekannte Verfahren wird bei aufgetragenen Pasten oder aufgedampften Schichten die jeweils erforderliche Spulengeometrie geschaffen.

Die Erfindung wird im folgenden anhand eines in einer Zeichnung dargestellten Ausführungsbeispiels näher beschrieben, aus dem sich weitere Vorteile ergeben.

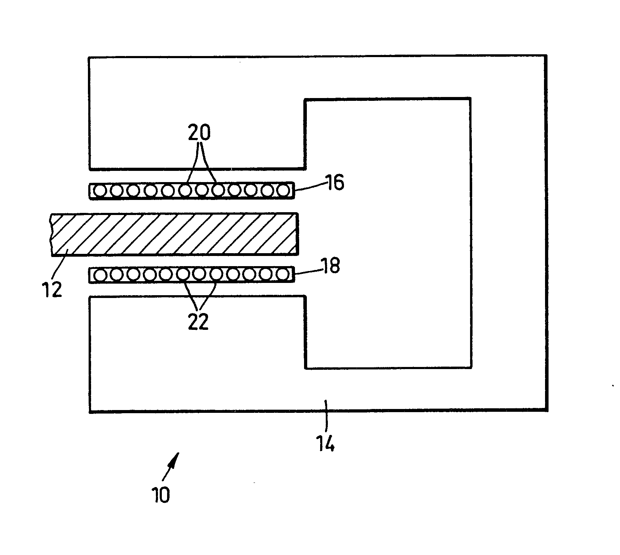

Die Zeichnung zeigt schematisch einen elektrodynamischen Ultraschallwandler 10, teilweise im Querschnitt. Der Wandler 10 dient zur Prüfung eines Stahlbandes 12. Es ist ein Magnetjoch 14 vorhanden, das ein starkes Magnetfeld erzeugt, dessen Feldlinien im wesentlichen senkrecht zu den Oberflächen des Stahlbandes 12 verlaufen.

Parallel zu einer Oberfläche des Stahlbandes 12 ist eine Erregerspule 16 im Bereich des vom Magnetjoch 14 erzeugten Magnetfeldes angeordnet. Auf der anderen Seite des Stahlbandes 12 befindet sich parallel zur Oberfläche im Bereich des Magnetfeldes eine Empfangsspule 18. Die Erreger- und die Empfangsspule 16, 18 weisen jeweils Windungen aus Drähten 20, 22 auf, die aus Widerstandsmaterial bestehen. Die Erregerspule 16 ist an einen nicht dargestellten Hochfrequenzgenerator angeschlossen, der Impulse hoher Leistung erzeugt. Die Empfangsspule 18 steht über nicht dargestellte Verstärker- und Steuerschaltungen mit einem Messempfänger in Verbindung. Die Drähte 20 können aus CuNi 11 bestehen, während die Drähte 22 aus NiCr 6015 zusammengesetzt sind.

Dass die Benutzung von Widerstandsmaterialien für die Erreger und Empfangswicklungen auf alle angesprochenen Probleme einen überraschend positiven Einfluss hat, sollen die folgenden Beispiele zeigen. Bei 3 verschiedenen Materialien sind jeweils die Spulenimpedanzen, die Totzeit sowie das Signal zu Rauschverhältnissen des 3. Rückwandechos für Wandlerspulen je aus Kupfer und aus Widerstandsmaterial angegeben, wobei die Spulenparameter so gewählt werden, dass die Spulen an die elektronischen Schaltungen angepasst waren (d.h. die Sendespulen mit den Impedanzen bei ca. 20 $\Omega$ und die Empfangsspulen bei ca. 1,2 K$\Omega$ liegen sollten).

Beispiel 1:
Spulendaten

a) Erregerwicklung
14 Windungen CuNi 11
Spulendurchmesser 14 mm
Widerstandsbelag 14,2 Ohm/m
Windungsquerschnitt 0,12 mm
b) Empfangswicklung
45 Windungen NiCr 6015
Spulendurchmesser 10 mm
Draht-Querschnitt 0,05 mm
Widerstandsbelag 592 Ohm/m

Die Vergleichsspulen mit entsprechenden Cu-Drähten wiesen die gleiche mechanischen Abmessungen auf.

Messfrequenz: 2 MHz
Material: St 37, 30 mm dick

Als charakteristische Daten werden ermittelt:

Für Spulen mit dem oben angegebenen Widerstandsmaterial:
Impedanz: Z Empfänger = 1,24 k$\Omega$ e$^{-j44°}$
Impedanz: Z Sender = 23,6 $\Omega$ e$^{j70°}$
Totzeit: t = 3,0 $\mu$sec
Signal/Rauschverhältnis: S/N = 13dB;

Für Spulen mit Leitungskupfer (Cu = Kupfer):
Impedanz: Z E$_{Cu}$ = 1,1 K$\Omega$ e$^{j56°}$

Impedanz: Z S$_{Cu}$ = 20,5 $\Omega$ e$^{j34°}$
Totzeit t$_{cu}$ = 7,0 $\mu$sec
Signal/Rauschverhältnis: S/N = 15 dB

Die entsprechenden Daten ohne Prüfling (= Abstandsvariation)

Für Spulen mit Widerstandsmaterial:
Impedanz: Z Empfänger = 1,65 k$\Omega$ e$^{-j39°}$
Impedanz: Z Sender = 36 $\Omega$ .e$^{j70°}$
Totzeit t = 3,5 $\mu$sec

Für Spulen mit Kupfer:
ECu = 3,6 k$\Omega$ e$^{j87°}$
SCu = 40 $\Omega$ e$^{j34°}$
Totzeit nicht genau messbar ($\approx$ 30 $\mu$sec)
Signal/Rauschverhältnis ohne Echos nicht messbar.

2. Beispiel
Bei gleichen Spulendaten und gleichem Messaufbau wurde nur der Prüfling ausgewechselt:
Material: P 41 MnV 5/2, Dicke 24 mm

Spulen aus Widerstandsmaterial:
Impedanz: $Z_E$ = 1.25 K$\Omega$ e$^{-j44°}$
Impedanz: $Z_S$ = 23.5 $\Omega$ e$^{j24°}$
t = 2,8 $\mu$sec
Signal/Rauschverhältnis: S/N = 9,9 dB

Spulen aus Kupfer:
Impedanz: $Z_{ECU}$ = 1.2 k$\Omega$ e$^{j37°}$
Impedanz: $Z_{Scu}$ = 20 $\Omega$ e$^{j38°}$
Totzeit: $t_{Cu}$ = 7 $\mu$sec
Signal/Rauschverhältnis: $S/N_{cu}$ = 11 dB

3. Beispiel: wie 1 und 2, jedoch
Material: 535/A3, Dicke 16 mm

Spulen aus Widerstandsmaterial:
Impedanz: $Z_E$ = 1,23 K$\Omega$ e$^{-j44°}$
Impedanz: $Z_S$ = 23,6 $\Omega$ e$^{j23°}$
Totzeit: t = 2.8 $\mu$sec
Signal/Rauschverhältnis: S/N = 17,7 dB

Spulen aus Kupfer:
Impedanz: $Z_{ECu}$ = 1,5 K$\Omega$ e$^{j30°}$
Impedanz: $Z_{SCu}$ = 24,1 $\Omega$ e$^{j70°}$
Totzeit: $t_{cu}$ = 7 $\mu$sec
Signal/Rauschverhältnis $S/N_{cu}$ = 19 dB

Die Beispiele zeigen deutlich die rund um den Faktor 2 verkürzte Totzeit sowie die vom Material des Prüflings und vom Abstandsvariationseffekt deutlich verringerte Abhängigkeit der charakteristischen Spulenimpedanzen der aus Widerstandsmaterial gefertigten Spulen gegenüber denen, die aus Kupferdraht gewickelt wurden.

Mit den erfindungsmässigen Erreger- und Empfangsspulen für elektrodynamische Wandler ist es also möglich, die Totzeit zu verkürzen sowie die negativen Einflüsse von unterschiedlichem Prüflingsmaterial und -abstand zu minimieren, ohne das Signal zu Rauschverhältnis nachteilig zu beeinflussen.

**Patentansprüche**

1. Elektrodynamischer, mit zumindest je einer Erreger- und Empfangsspule versehener Ultraschallwandler für die zerstörungsfreie Werkstoffprüfung mittels Ultraschall, dadurch gekennzeichnet, dass die für die Stromleitung bestimmten Teile der Erreger- und/oder Empfangsspule aus Widerstandsmaterial bestehen, wobei der spezifische Widerstand des Widerstandsmaterials bei 20°C etwa zehn- bis siebzigmal grösser ist als der spezifische Widerstand von Leitungskupfer bei 20°.

2. Elektrodynamischer Ultraschallwandler nach Anspruch 1, dadurch gekennzeichnet, dass die Erreger- und die Empfangsspulen aus unterschiedlichem Widerstandsmaterial bestehen.

3. Elektrodynamischer Ultraschallwandler nach Anspruch 1 oder 2, dadurch gekennzeichnet, dass die Empfangsspule aus NiCr 6015 besteht.

4. Elektrodynamischer Ultraschallwandler nach Anspruch 1, dadurch gekennzeichnet, dass die Erregerspule aus CuNi 11 besteht.

5. Elektrodynamischer Ultraschallwandler nach Anspruch 1, dadurch gekennzeichnet, dass das Widerstandsmaterial aus einem Metall-, Metallegierungs- oder Kohlenstoffpulver und einem Bindemittel besteht.

6. Elektrodynamischer Ultraschallwandler nach einem der Ansprüche 1 bis 5, dadurch gekennzeichnet, dass das Widerstandsmaterial auf ein Trägermaterial aufgetragen ist.

7. Elektrodynamischer Ultraschallwandler nach Anspruch 6, dadurch gekennzeichnet, dass das Widerstandsmaterial aufgedampft ist.

**Claims**

1. Electrodynamic ultrasonic transducer provided with at least one respective operating coil and receiving coil for interference-free materials testing using ultrasound, characterised in that the parts of the operating and/or receiving coil intended for conducting current are composed of resistance material, the specific resistance of the resistance material being approximately 10 to 60 times higher at 20°C than the specific resistance of conductive copper at 20°.

2. Electrodynamic ultrasonic transducer according to claim 1, characterised in that the operating and receiving coils are composed of differing resistance material.

3. Electrodynamic ultrasonic transducer according to claim 1 or 2, characterised in that the receiving coil is composed of NiCr 6015.

4. Electrodynamic ultrasonic transducer according to claim 1, characterised in that the operating coil is compound of CuNi 11.

5. Electrodynamic ultrasonic transducer according to claim 1, characterised in that the resistance material is composed of a metal, metal alloy or carbon powder and a binder.

6. Electrodynamic ultrasonic transducer according to one of claims 1 to 5, characterised in that the resistance material is applied to a carrier material.

7. Electrodynamic ultrasonic transducer according to claim 6, characterised in that the resistance material is applied by deposition.

**Revendications**

1. Convertisseur à ultrasons électrodynamique, muni d'au moins une bobine d'excitation et une bobine de réception, pour le contrôle non destructif des matériaux à l'aide d'ultrasons, convertisseur caractérisé en ce que les pièces destinées à la conduction du courant de la bobine d'excitation et/ou de réception sont constituées par un matériau résistant dont la résistance spécifique à 20°C est de dix à soixante dix fois supérieure à la résistance spécifique de conducteurs en cuivre à 20°C.

2. Convertisseur selon la revendication 1, caractérisé en ce que la bobine d'excitation et la bobine de réception sont constituées de matériaux différents.

3. Convertisseur selon l'une des revendications 1 ou 2, caractérisé en ce que la bobine de réception est constituée de NiCr 6015.

4. Convertisseur selon la revendication 1, caractérisé en ce que la bobine d'excitation est constituée de CuNi 11.

5. Convertisseur selon la revendication 1, caractérisé en ce que le matériau résistant est constitué d'une poudre de métal, d'alliage métallique ou de carbone et d'un liant.

6. Convertisseur selon l'une des revendications 1 à 5, caractérisé en ce que le matériau résistant est déposé par un matériau de support.

7. Convertisseur selon la revendication 6, caractérisé en ce que le matériau résistant est déposé par vaporisation.

20

16

12

18

22

14

10